# EUROPEAN PATENT APPLICATION

(11) **EP 4 164 114 A1**
(43) Date of publication of application: **12.04.2023**
(21) Application number: 21201232.2
(22) Date of filing: 06.10.2021
(51) Int. Cl.: H02P 6/32, H02P 25/03, H02K 19/12, H02K 19/26

(54) **ELECTRIC MACHINE, IN PARTICULAR ELECTRICAL MOTOR OR ELECTRICAL GENERATOR**

(71) Applicant: MAHLE International GmbH, 70376 Stuttgart (DE)
(72) Inventor: RAZPOTNIK, Simon, 5291 Miren (SI)
(74) Representative: BRP Renaud & Partner mbB Rechtsanwälte Patentanwälte Steuerberater

(57) **Abstract**

The invention relates to an electric machine (1), in particular externally or self excited excited synchronous electric machine with a stator (2) and with a rotatable rotor (3). The stator (2) comprises a primary electrical circuit arrangement (4a) with a primary coil (5a). The rotor (3) comprises - galvanically separated from the primary circuit arrangement (4) - a secondary electrical circuit arrangement (4b) with at least one secondary coil (5b) having secondary windings, wherein the secondary coil (5b) can be inductively coupled to the at least one primary coil (5b) for energy transfer from the primary electrical circuit arrangement (4a) to the secondary electrical circuit arrangement (4b). In the stator electrical circuit arrangement (4a), a DC voltage source (16) for generating a DC electrical voltage in the primary electrical circuit arrangement (4a) and at least one controllable semiconductor switch (15) for converting the DC electrical voltage generated by the DC electrical voltage source (16) into an AC electrical voltage are arranged. An electrical rectifier (6) is arranged in the secondary circuit arrangement (4b) for rectifying the AC electrical voltage induced in the secondary coil (5b).

## Description

The invention relates to an electric machine, in particular an electrical motor or an electrical generator.

Self excited electrical machines require an electric DC voltage in their rotor to generate a magnetic rotor field.

It is an object of the present invention to show new ways in the development of electrical machines, in particular electrical motor and electrical generators, with wireless electrical energy transmission. In particular, an improved embodiment is to be created which is characterized by a technically simple and space-saving design, so that this design is also accompanied by cost savings in the manufacture of the machine.

This object is achieved by an electrical machine according to independent patent claim 1. Preferred embodiments are the subject of the dependent patent claims.

Accordingly, the basic idea of the invention is to realize the electrical power transmission to a rotatable rotor of an electrical machine - in order to supply the rotor coils of the electrical rotor there with an electrical direct current for magnetic field generation - with the aid of two electrical circuit arrangements, of which a first, primary circuit arrangement is connected fixedly in terms of rotation to the stator and a second, secondary circuit arrangement is connected fixedly in terms of rotation to the rotor. Both circuit arrangements are inductively coupled to each other by means of two coils - a primary coil contained in the first circuit arrangement and a secondary coil contained in the secondary circuit arrangement.

For the purposes of this application, the term "stator" refers to stationary parts of electric machine surrounding the rotor.

According to the invention, all essential electronic components for generating the electric direct current in the rotor are provided in both circuit arrangements. Thus, the primary circuit arrangement provided at the stator is provided with a semiconductor switch which can convert the provided electrical DC voltage into an electrical AC voltage by successive switching between an open position and a closed position. Independent of the rotary motion of the rotor of the electric machine relative to the stator, an alternating electric voltage can thus be induced in the secondary coil from the alternating electric voltage generated in the primary coil. To convert this alternating electric voltage into that for generating a direct electric current, a semiconductor diode is provided in the secondary circuit arrangement to eliminate the negative half-waves of the alternating electric voltage. To smooth the remaining positive half-waves, in addition to the semiconductor diode, an electrical capacitance - for example in the form of a capacitor - can be provided in the secondary circuit arrangement, which acts in the manner of a low-pass filter to smooth the remaining positive half-waves to a DC electrical voltage.

The secondary coil is preferably arranged coaxially around the rotor shaft.

The result is an electrical machine which - completely independently of the electrical current to be applied to the stator windings or induced in the stator winding - provides an electrical DC voltage or current in a simple manner - and thus in a way which saves both installation space and costs - by wireless energy transmission in the rotatable or rotating rotor. The same applies when the electrical machine is operated as an electrical generator.

An electric machine, particular an electrical motor or electrical generator, according to the invention, comprises a stator and a rotor which is drive-connected to the stator by magnetic interaction and is rotatable relative to the stator about an axis of rotation. The stator comprises a primary electrical circuit arrangement with a primary coil having a primar winding. The rotor comprises - galvanically separated from the primary switching arrangement - a secondary electrical circuit arrangement with a secondary coil having a secondary winding. The secondary coil is inductively couplable or coupled to the at least one primary coil for energy transfer from the primary electrical circuit arrangement to the secondary electrical circuit arrangement. In the primary circuit arrangement, according to the invention, a DC electrical voltage terminal for connecting a DC electrical voltage source providing a DC electrical voltage in the primary electrical circuit arrangement and at least one controllable semiconductor switch for converting the DC electrical voltage generated by the DC electrical voltage source into an AC electrical voltage are arranged. According to the invention, an electrical (flyback-)rectifier is arranged in the secondary circuit arrangement for rectifying the AC electrical voltage induced in the secondary coil. Furthermore, according to the invention, the stator comprises a stator body on which electrically energizable stator windings are arranged. Further, the rotor further comprises a rotor body on which electrically energizable rotor winding is arranged for generating a magnetic rotor field.

When operating as an electrical generator, the stator windings of the stator can be connected to an electrical output rectifier, in particular in the form of an electrical bridge circuit, which rectifies the AC electrical voltage induced in the stator windings into a DC electrical voltage.

According to a preferred embodiment, the (flyback-)rectifier comprises a semiconductor diode for rectifying the AC electric voltage and an electric capacitance for smoothing the rectified AC voltage. By means of the semiconductor diode, the negative half-wave of the AC voltage can be suppressed for rectification. The positive half-wave can be smoothed by means of the electrical capacitance. For this purpose, the capacitance is designed as an electrical frequency low-pass filter by appropriate di-mensioning and arrangement of the capacitance in the secondary circuit configuration. Preferably, an electrical capacitor is used as the electrical capacitance.

According to a further preferred embodiment, the controllable semiconductor switch is configured to convert the electrical DC voltage into an electrical AC voltage with an AC voltage frequency between 1 kHz and 1 MHz. In this way, the two circuit arrangements are adapted and optimized for use in the electrical machine in which the rotor typically rotates at a rotational frequency in said frequency range.

According to another preferred embodiment, a winding ratio between a number of loops of the primary winding of the primary coil and a number of loops of the secondary winding of the secondary coil may be between 1:1 and 1:15. In this way, the two coils act as an electrical transformer, ensuring that an AC electrical voltage with a sufficiently high voltage level is generated in the secondary coil.

A further embodiment proves to be particularly preferred in which in the secondary circuit arrangement exactly one primary coil is arranged which can be coupled inductively with the secondary coil. This embodiment proves to be technically particularly easy to implement and thus particularly cost-effective.

Preferably, the secondary coil with the secondary windings is arranged radially on the outside of a rotor shaft of the rotor and is non-rotatably connected to the rotor shaft. This variant requires particularly little installation space in the axial direction and also enables improved inductive coupling of the primary coil to the secondary coil. This increases the efficiency of the electrical energy transfer from the primary coil to the secondary coil.

According to a further advantageous further development, the secondary coil has essentially the geometry of a hollow cylinder whose rotor through-opening extending along the axis of rotation is penetrated by the rotor shaft. This variant is particularly compact in the radial direction.

According to another preferred embodiment, the rotor body can be designed as a claw-pole rotor with claw teeth and a rotor core on which the rotor winding is are arranged. This embodiment requires particularly little installation space in the radial direction away from the axis of rotation of the machine.

According to a preferred embodiment, the secondary coil has a hollow-cylindrical secondary coil carrier comprising two axial end sections and a center section arranged axially between the two end sections. The secondary winding is arranged radially outwardly on the center section. Preferably, the two axial end sections project radially beyond the center section.

According to an advantageous further development, the primary coil has a primary coil carrier which has two axial end sections and a center section arranged axially between the two end sections. The primary winding is arranged circumferentially on the center section. Preferably, the two end sections can project radially inwardly or/and outwardly beyond the center section.

Preferably, the primary coil carrier has a substantially annular or/and hollow cylindrical geometric shape, extends along the circumferential direction completely circumferentially around the rotor shaft and is thus wound on the primary coil carrier. In this way, a particularly large energetic coupling of the primary coil with the secondary coil is achieved.

According to another preferred embodiment, the primary coil carrier has a substantially ring-segment-shaped geometric design and extends along the circumferential direction in sections around the rotor shaft. In this embodiment, the primary winding is arranged circumferentially along the circumferential direction in the area of the center section on the outer circumferential side of the primary coil carrier and thus on the primary coil carrier. This variant requires less installation space - particularly in the circumferential direction - than the fully circumferential design.

Particularly preferably, the primary coil carrier can extend along the circumferential direction over a circumferential angle of at most 60°, preferably at most 30°. This variant saves both material and installation space and thus proves to be particularly cost-saving.

It is expedient to arrange the rectifier in a rectifier housing which is non-rotatably connected to the rotor shaft. In this way, the rectifier can be installed as a unit on the rotor shaft together with the semiconductor diode and the electrical capacitance to save space. If an electrically conductive material, in particular a metal, is selected as the material for the rectifier housing, said electrical elements of the rectifier can furthermore be electrically shielded particularly well from the external environment of the rectifier housing.

According to an advantageous further development, the rectifier or the rectifier housing can be arranged axially between the secondary coil and the rotor body. This variant also proves to be particularly space-saving, especially in the axial direction of the electric machine.

According to another preferred embodiment, the rotor body can be designed as a claw-pole rotor with claw teeth and a rotor core on which the rotor winding is arranged. This embodiment requires particularly little installation space in the radial direction away from the axis of rotation of the machine.

Preferably, the electric machine according to the invention can be configured as an internal rotor. This variant also proves to save installation space.

Further important features and advantages of the invention will be apparent from the sub-claims, from the drawings and from the accompanying description of the figures with reference to the drawings.

It is understood that the above-mentioned features and those still to be explained below can be used not only in the combination indicated in each case, but also in other combinations or on their own, without leaving the scope of the present invention.

Preferred examples of embodiments of the invention are shown in the drawings and are explained in more detail in the following description, wherein the same reference signs refer to identical or similar or functionally identical components.

They show, schematically in each case:
- Fig. 1: an electrical wiring example of an flyback converter of an electrical machine according to the invention in schematic representation,
- Fig. 2: is a perspective view of an electric machine according to the invention without Fly-back primary core with primary winding,
- Fig. 3a: a detailed perspective view of a first variant of the primary coil of the electric machine according to Fig. 2,
- Fig. 3b: a detailed perspective view of a second variant of the primary coil of the electric machine according to Fig. 2,
- Fig. 3c: a detailed perspective view of a third variant of the primary coil of the electric machine according to Fig. 2.

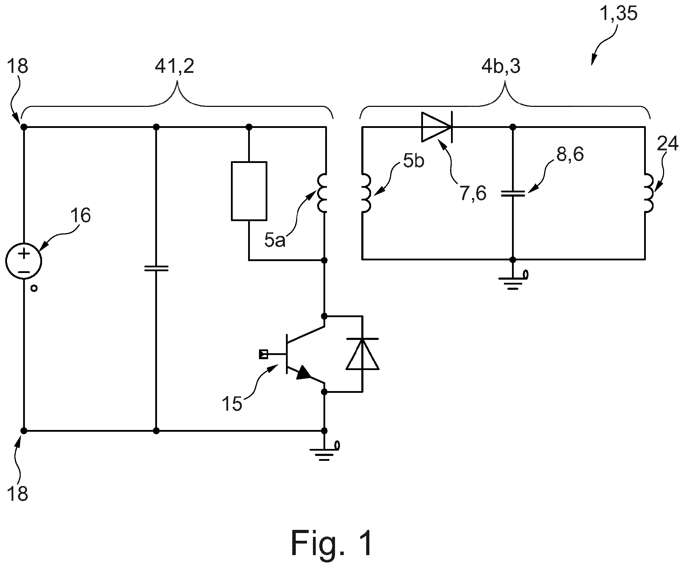

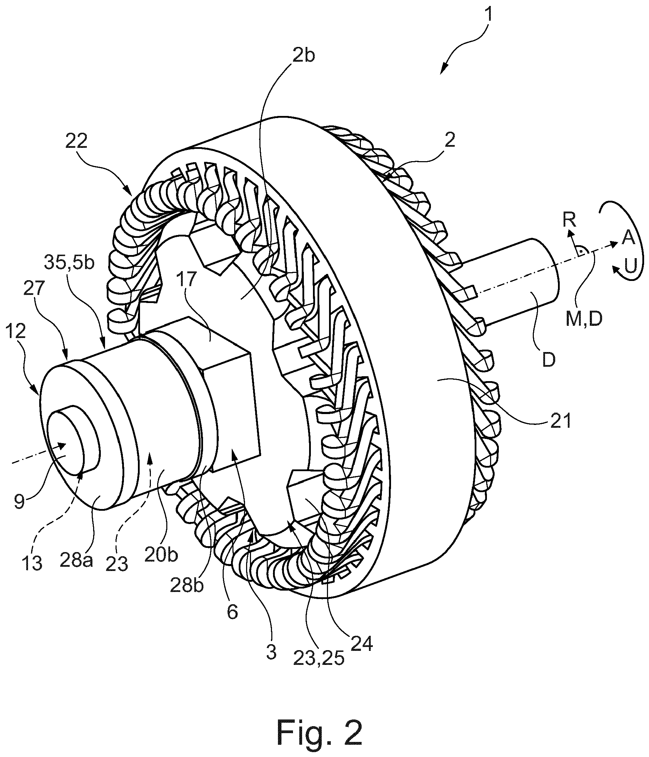

Figure 1 illustrates in schematic form the electrical wiring of a flyback converter of an electric machine 1 according to the invention. Figure 2 illustrates in perspective and also by way of example a possible technical implementation of the machine 1. The machine 1 thus comprises a stator 2 and a rotor 3 which is drive-connected to the stator 2 by magnetic interaction and is rotatable relative to the stator 2 about an axis of rotation D. The rotor 3 is rotatable relative to the stator 2 about an axial direction A. An axial direction A extends along this axis of rotation D, a radial direction R extends perpendicular to the axial direction A away from the axis of rotation D, a circumferential direction U runs perpendicular to the axial direction A and also perpendicular to the radial direction R around the axis of rotation D.

According to Figure 2, the rotor 3 of the machine 1 comprises a rotor shaft 9, the central longitudinal axis M of which is identical to the axis of rotation D. The rotor shaft 9 can be rotated by means of a rotor shaft assembly. The rotor shaft 9 can be rotatably mounted by means of a bearing device not shown on the stator 2 or on a housing (not shown) formed stationary with respect to the stator. The rotor 3 comprises a rotor body 23 which is arranged in a rotationally fixed manner on the rotor shaft 9 and on which an electrically energizable rotor winding 24 is arranged for generating a magnetic rotor field which can interact with the stator 2.

In the example of Figure 2, the machine 1 is designed as an internal rotor, i.e. the rotatable rotor 3 is arranged closer to the axis of rotation D with respect to the radial direction R than the stationary stator 2. Accordingly, the stator 2 comprises a stator body 21 on which electrically energizable stator windings 22 are arranged. According to Figure 1, the stator 2 additionally comprises an electrical primary electrical switching arrangement 4a with a primary coil 5a having a primary winding 20a. In the example scenario, exactly one primary coil 5a, which can be inductively coupled to a secondary coil 5b, is arranged in the primary circuit arrangement 4a. In addition to the electrically energizable rotor winding 24, the rotor 3 comprises - galvanically separated from the primary circuit arrangement 4a - a secondary electrical circuit arrangement 4b with the secondary coil 5b having secondary windings 20b. The secondary coil 5b can be inductively coupled to the at least one primary coil 5b for energy transfer from the primary electrical circuit arrangement 4a to the secondary electrical circuit arrangement 4b. The primary circuit arrangement 4a and the secondary circuit arrangement 4b form an flyback converter 35.

As Figure 1 illustrates, in the primary electrical circuit arrangement 4a, a DC electrical voltage terminal 18 is provided to which a DC voltage source 16 is connected to provide a DC electrical voltage in the primary electrical circuit arrangement 4a. When operated as a generator, the DC electrical voltage is a battery voltage. When operated as a motor, and in motor case, the DC electrical voltage is a power supply voltage.

Furthermore, at least controllable semiconductor switch 15, preferably a transistor, particularly preferably a field-effect transistor, is arranged in the primary electrical circuit arrangement 4a for converting the electrical DC voltage 16 into an electrical AC voltage. The controllable semiconductor switch 15 is designed for converting the electrical DC voltage into an electrical AC voltage with an AC voltage frequency between 1 kHz and 1 MHz.

An electrical flyback rectifier 6 is arranged in the secondary circuit arrangement 4b for rectifying the AC electrical voltage induced in the secondary coil 5b. The fly-back rectifier 6 includes a semiconductor diode 7 for rectifying the AC electric voltage and an electric capacitance 8, typically in the form of an electric capacitor, for smoothing the rectified AC voltage. In addition, when operating as an electrical motor, the rotor winding 24 of the rotor 3 to be electrically energized with the generated electrical direct current is arranged in the secondary electrical circuit arrangement 4b - quasi as an electrical consumer. The direct electric current generates a magnetic field which in motor mode drives the rotor 3 by magnetic interaction with the magnetic stator field of the stator windings present in the stator (not shown in Figure 1, since they are not part of the two circuit arrangements 4a, 4b) and thus sets it in rotary motion relative to the stator 2.

When operated as an electrical generator, the rotating rotor magnetic field causes an induced AC voltage in the stator windings. The induced AC voltage is then rectified and represent an DC supply voltage.

The winding ratio N1:N2 between a number N1 of loops of the primary winding 20a of the primary coil 5a and a number N2 of loops of the secondary winding 20b of the secondary coil 5b is in the example between 1:1 and 1:15.

According to Figure 2, the secondary coil 5b of the flyback converter 35 is arranged with the secondary winding 20b radially on the outside of a rotor shaft 9 of the rotor 3 and is connected to it in a rotationally fixed manner. As shown in Figure 2, the secondary coil 5b can have essentially the geometry of a hollow cylinder 12 whose rotor through-opening 13 extending along the axis of rotation D penetrates the rotor shaft 9. The secondary coil 5b may have a hollow cylindrical secondary coil carrier 27 comprising two axial end sections 28a, 28b and a center section 29 disposed axially therebetween. Secondary winding 20b is disposed radially outwardly on the center section 29. The two end sections 28a, 28b can project radially beyond the center section 29.

As Figure 2 further illustrates, the flyback rectifier 6 can be arranged in a rectifier housing 17 which is non-rotatably connected to the rotor shaft 9. Preferably, fly-back rectifier 6 or rectifier housing 17 is arranged axially between secondary coil 5b and rotor body 23 as shown. The primary coil 5a of the primary circuit arrangement 4a not shown in Figure 2 can expediently be arranged radially at a distance from the secondary coil 5b and axially at the same height as the latter.

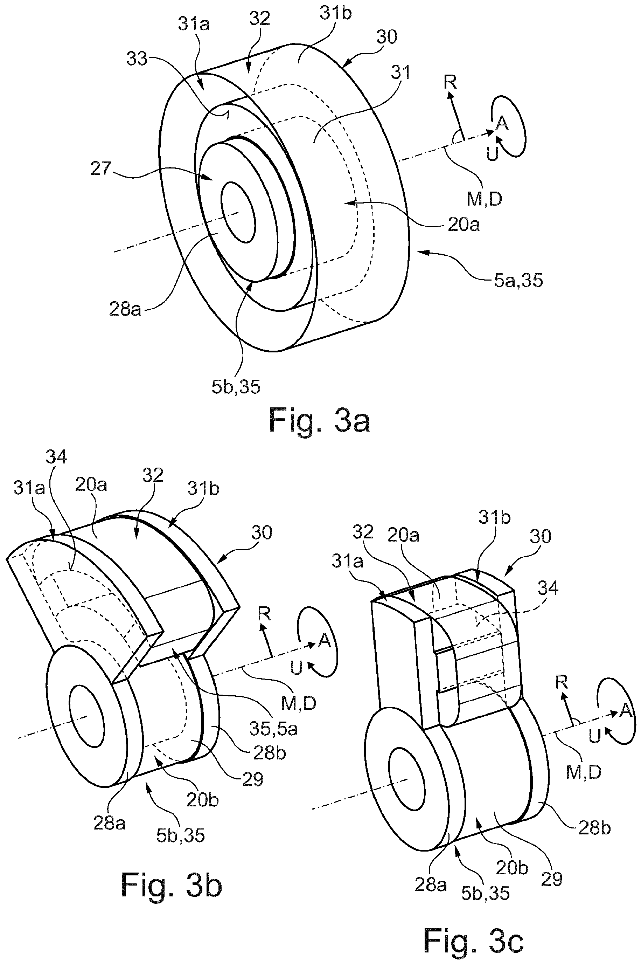

Figures 3a, 3b and 3c illustrate three different embodiments of the primary coil 5a.

In all three variants, the primary coil 5a has a primary coil carrier 30 comprising two axial end sections 31a, 31b and a center section 32 arranged axially therebetween. The primary winding 20a of the primary coil 5a is arranged circumferentially on the center section 32. The two axial end sections 30a, 30b project radially inwards beyond the center section 31 in order to axially limit the primary coil carrier 30 and axially fix the primary winding 20a.

In the variant according to Figure 3a, the primary coil carrier 30 has a substantially annular hollow-cylindrical geometrical shape and extends along the circumferential direction U completely circumferentially around the rotor shaft 9. In this variant, the primary winding 20a is arranged along the circumferential direction U in the region of the center section 32 on an inner circumferential side 33 of the primary coil carrier 30 and in this way wound onto the primary coil carrier 30.

In the variant according to Figure 3b, the primary coil carrier 30 has a ring-segment-shaped geometric design in a plan view along the axial direction A or the axis of rotation D and extends along the circumferential direction U in sections around the rotor shaft 9 without running completely around it. In this variant, the primary winding 20a is arranged in the area of the center section 32 on an outer circumferential side 34 of the primary coil carrier 30 in a fully circumferential manner on the primary coil carrier 30 and is thus wound up.

In the example of Figure 3b, the primary coil carrier 30 extends in plan view in the axial direction A or axis of rotation D along the circumferential direction U over a circumferential angle of approximately 60°.

Figure 3c shows a variant of the example of Figure 3b The example of Figure 3c differs from that of Figure 3b in that the primary coil carrier 30 extends only over a circumferential angle of approximately 30°. This variant thus requires less installation space than that of figure 3b.

## Claims

1. Electric machine (1), in particular self or externally excited synchronous electric machine,
- having a stator (2) and having a rotor (3) which is drive-connected to the stator (2) by magnetic interaction and is rotatable relative to the stator (2) about an axis of rotation (D);
- wherein the stator (2) comprises a stator body (21) on which stator windings (22) are arranged for generating an induced voltage;
- wherein the rotor (3) comprises a rotor body (23) on which at least one electrically energizable rotor winding (24) arranged for generating a magnetic rotor field which can interact with the magnetic stator field, particularly for driving the rotor or/and for inducing a voltage in the stator windings (22) ;
- wherein the stator (2) further comprises a primary electrical circuit arrangement (4a) with a primary coil (5a) having primary windings (20a) and wherein the rotor (3), galvanically separated from the primary circuit arrangement (4a), further comprises a secondary electrical circuit arrangement (4b) with at least one secondary coil (5b) having secondary windings (20b), the primary circuit arrangement (4a) and the the secondary circuit arrangement (4b) forming a flyback converter (35) of the machine (1),
- wherein the secondary coil (5b) is inductively couplable or coupled to the at least one primary coil (5a) for energy transfer from the primary electrical circuit arrangement (4a) to the secondary electrical circuit arrangement (4b);
- wherein in the primary circuit arrangement (4a) at least one electrical DC voltage terminal (18) for connecting a DC voltage source (16) providing an electrical DC voltage and at least one controllable semiconductor switch (15), preferably a transistor, particularly preferably a field-effect transistor, for converting the provided electrical DC voltage into an electrical AC voltage are arranged;
- wherein an electric (flyback-)rectifier (6) is arranged in the secondary circuit arrangement (4b) for rectifying the electric alternating voltage induced in the secondary coil (5b).

2. Electric machine according to claim 1,
**characterized in that**
the (flyback-)rectifier (6) comprises a semiconductor diode (7) for rectifying the AC electric voltage and an electric capacitor (8) for smoothing the rectified AC voltage.

3. Electric machine according to claim 1 or 2,
**characterized in that**
the controllable semiconductor switch (15) is designed for converting the DC electric voltage into an AC electric voltage with an AC voltage frequency between 1 kHz and 1 MHz.

4. Electrical machine according to one of the claims 1 to 3,
**characterized in that**
a winding ratio between a number (N1) of loops of the primary winding (20a) of the primary coil (5a) and a number (N2) of loops of the secondary winding (20b) of the secondary coil (5b) is between 1:1 and 1:15, preferably about 1:10.

5. Electric machine according to any of the preceding claims,
**characterized in that**
exactly one primary coil (5a), which can be inductively coupled to the secondary coil (5b), is arranged in the secondary circuit arrangement (4b).

6. Electric machine according to one of the preceding claims,
**characterized in that**
the secondary coil (5b) is arranged with the secondary windings (20b) radially outwardly on a rotor shaft (9) of the rotor (3) and is non-rotatably connected thereto.

7. Electric machine according to one of the preceding claims,
**characterized in that**
the secondary coil (5b) has substantially the geometry of a hollow cylinder (12) whose rotor through-opening (13) extending along the axis of rotation (D) passes through the rotor shaft (9).

8. Electric machine according to any of the preceding claims,
**characterized in that**
the secondary coil (5b) comprises a hollow-cylindrical secondary coil carrier (27) having two axial end portions (28a, 28b) and a central portion (29) arranged axially therebetween, the secondary windings (20b) being arranged radially outwardly on the central portion (29), the two end portions (28a, 28b) preferably projecting radially beyond the central portion (29).

9. Electric machine according to one of the preceding claims,
**characterized in that**
the primary coil (5a) comprises a primary coil carrier (30) having two axial end portions (31a, 31b) and a center portion (32) arranged axially therebetween, the center portion (32) having the primary windings (20a) arranged circumferentially thereon.

10. Electric machine according to claim 9,
**characterized in that**
the primary coil support (30) has a substantially annular hollow cylindrical geometrical shape and extends along the circumferential direction (U) completely circumferentially around the rotor shaft (9).

11. Electric machine according to claim 9,
**characterized in that**
- the primary coil carrier (30) has a substantially ring-segment-shaped geo-metric shaping and extends along the circumferential direction (U) sectionally around the rotor shaft (9),
- wherein the primary windings (20a) are arranged completely circumferentially at least in the region of the center section (32) on an outer circumferential side (34) of the primary coil carrier (30).

12. Electrical machine according to claim 11,
**characterized in that**
the primary coil carrier (30) extends along the circumferential direction (U) over a circumferential angle of at most 60°, preferably at most 30°.

13. Electric machine according to any one of the preceding claims,
**characterized in that**
the (flyback-)rectifier (6) is arranged in a rectifier housing (17) connected in a rotationally fixed manner to the rotor shaft (9).

14. Electric machine according to one of the preceding claims,
**characterized in that**
the rectifier (6) or the rectifier housing (7) is arranged axially between the secondary coil (5b) and the rotor body (23).

15. Electric machine according to one of the preceding claims,
**characterized in that**
the machine (1) is designed as an internal rotor.
